# EUROPEAN PATENT SPECIFICATION

(11) **EP 3 685 970 B1**
(45) Date of publication and mention of the grant of the patent: **13.12.2023**
(21) Application number: 18859601.9
(22) Date of filing: 21.09.2018
(51) Int. Cl.: B25J 11/00, B25J 5/00, B25J 19/04, B25J 9/16, A47L 9/28, G05D 1/02

(54) **MOBILE ROBOT AND CONTROL METHOD FOR MOBILE ROBOT**
MOBILER ROBOTER UND STEUERUNGSVERFAHREN FÜR MOBILEN ROBOTER
ROBOT MOBILE ET PROCÉDÉ DE COMMANDE POUR ROBOT MOBILE

(30) Priority: 22.09.2017 KR 20170122783
(43) Date of publication of application: 29.07.2020
(73) Proprietor: LG Electronics Inc., Seoul 07336 (KR)
(72) Inventor: CHEONG, Janghun, Seoul 08592 (KR)
(74) Representative: Ter Meer Steinmeister & Partner
(86) International application number: PCT/KR2018/011249
(87) International publication number: WO 2019/059714

(56) References cited:
- JP-A- 2005 312 893
- KR-A- 20040 003 089
- KR-A- 20130 030 932
- KR-B1- 101 247 136
- KR-B1- 101 306 501
- US-A1- 2009 192 647
- US-A1- 2017 005 826

## Description

### TECHNICAL FIELD

The present disclosure relates to a mobile robot and a method of controlling the same, and more particularly, to a recognizing technology of a mobile robot.

### BACKGROUND ART

Robots have been developed for industrial use to administrate some parts of factory automation. Recently, the application fields of robots have further expanded, leading to the development of medical robots, aerospace robots, etc. and the manufacture of robots used in general homes for domestic uses. Among such robots, an autonomous mobile robot is referred to as a mobile robot. A representative example of a mobile robot used in a home is a robot cleaner.

Technologies of autonomously learning and mapping a traveling area by a mobile robot and recognizing a current position thereof on a map have been known.

Various smart functions using a mobile robot have been known. The related art (Korean Patent Publication No. 10-2013-0030932) discloses a technology of finding a lost article by doing photography using an image acquirer and transmitting information acquired through photography to a user terminal when an obstacle is detected during cleaning or there is an obstacle to traveling.

### -Patent Document

Korean Patent Publication No. 10-2013-0030932 (published on March 28, 2013)

US 2009/192647 A1 presents an object search apparatus and method. An object search apparatus acquires, from each IC tag of IC tags corresponding to objects respectively, an object information item including an identifier of an object, a hierarchical level, a detection method for detection of the object, and a manipulation method for the object, to obtain a plurality of object information items including a target object information item of a target object, selects, from the object information items, an object information item higher in the hierarchical level than the target object, detects an object corresponding to selected object information item by using the detection method in the selected object information item, manipulates detected object in accordance with the manipulation method in the selected object information item, selects target object information item from the object information items, and detects the target object from the detected object by using the detection method in the target object information item.

US 2017/005826 A1 presents an apparatus and a method for notifying a position of an object are provided. The apparatus includes a communication circuitry, a processor configured to control the communication circuitry to receive information of an object from an electronic device, control to search for whether or not an object corresponding to the received information is located within a preset range through a preset wireless communication method, and control to perform a notification operation based on a result of the search.

### DISCLOSURE

### TECHNICAL PROBLEM

In the above related art, the possibility that a mobile robot moves in all places of a traveling area without priority in order to search for an object is high, and thus, there is a problem in that a long time takes to find the object. A first objective of the present disclosure is to overcome the problem to enable the mobile robot to effectively find the object.

A second objective of the present disclosure is to allow a user to immediately go to a corresponding position and to acquire a discovered object through information on the discovered object detected by a mobile robot.

A third objective of the present disclosure is to effectively search for an object in consideration of the characteristics of each lost article even if there is a plurality of lost articles.

A fourth objective of the present disclosure is to allow a user to easily input an area in which a mobile robot is supposed to search for an object.

In the above related art, an object may be searched for without specifying a lost article that is a target article of a mobile robot, and thus, there is a problem in that unnecessary discovered object information is indiscreetly transmitted to a user. A fifth objective of the present disclosure is to overcome the problem.

A sixth objective of the present disclosure is to allow a user to easily input a lost article to be detected by a mobile robot.

A seventh objective of the present disclosure is to smartly assist information input of a user using pre-stored information.

In the above related art, a mobile robot transmits an image of a discovered object, and thus, there is a problem in that privacy of a user is exposed to an image of a discovered object. An eighth objective of the present disclosure is to overcome the problem.

### TECHNICAL SOLUTION

One or more objects of the present technique are achieved by the invention set out by the features of the independent claims.

To overcome the problems, in an aspect of the present disclosure, a mobile robot includes a traveling unit configured to move a main body, a sensing unit configured to detect a surrounding object while the mobile robot travels, a communication module configured to get input or receive information and to output or transmit information, and a controller configured to perform control to search for an object while the mobile robot travels in an area specified according to area information input or received from the communication module, and to perform control to output or transmit identification information and position information of a detected discovered object through the communication module.

A partial area may be divided from a traveling area. The controller may perform control to search for an object while the mobile robot travels in the partial area specified according to the area information.

The communication module may get input or receive a plurality of pieces of object information and may get input or receive area information matched with each of the pieces of object information.

The controller may perform control to change an object that is searched for depending on an area to which a current position belongs.

The controller may perform control to search for an object specified according to the object information that is input or received from the communication module.

The controller may perform control to compare object information that is newly input or received from the communication module with pre-stored object information and to propose the pre-stored object information through the communication module when the newly input object information is matched with the pre-stored object information.

The controller may perform control to search for an object using an image acquired from the sensing unit and may perform control to output or transmit information except for an image of the discovered object through the communication module.

To overcome the problems, in another aspect of the present disclosure, a method of controlling a mobile robot includes an input operation of receiving information for traveling, a travel operation of searching for an object while the mobile robot travels in an area specified according to the area information, and an output operation of outputting identification information and position information of a discovered object, detected in the travel operation.

A partial area may be divided from a traveling area. The input operation may include specifying the partial area according to the area information.

The input operation may include specifying an area below furniture according to input of the area information.

The area information may include information on a height to an outer upper limit surface.

The area information may include an image of a partial area.

The input operation may include receiving a plurality of pieces of object information and receiving area information matched with each of the pieces of object information. The travel operation may include changing an object that is searched for depending on an area to which a current position belongs.

The input operation may include receiving object information. The travel operation may include searching for an object specified according to the object information.

The object information may include information on a volume of an object.

The object information may include a name of a type or an image of an object.

The input operation may include comparing newly input object information with pre-stored object information and proposing the pre-stored object information to a user when the newly input object information is matched with the pre-stored object information.

The input operation may include comparing newly input object information with pre-stored object information and proposing selection of any one of the newly input object information and the pre-stored object information when the newly input object information is matched with the pre-stored object information.

The output operation may include outputting discovery time information of a discovered object.

The method may further include searching for an object using an image acquired in the travel operation, wherein the output operation may include outputting information except for an image of a discovered object.

The object information may include an image of an object.

### ADVANTAGEOUS EFFECTS

An object may be searched for while a mobile robot travels in an area specified according to area information, and thus, the mobile robot may preferentially search for a partial area with high possibility that there is a lost article.

Identification information and position information of a discovered object may be output to a user, and thus, a user may immediately recognize a position of a corresponding discovered object to easily acquire the discovered object.

An area below furniture with high possibility that there is a lost article may be specified to effectively find the lost article.

Area information may be input using information on the height to an outer upper limit surface and/or an image of a partial area, and thus, a user may easily specify a partial area for searching of a mobile robot.

A plurality of pieces of object information and area information matched with each piece of object information may be received, a search range may differ for each lost article while a plurality of lost articles is simultaneously searched for, thereby effectively searching for a lost article.

Object information may be received, and thus, a mobile robot may intensively search for a lost article that a user wants to find, and it may be convenient that the user does not necessarily receive unnecessary information.

Object information may be input using information on the volume of an object, a name of a type of the object, and/or an image, and thus, the user may easily specify a target object of a mobile robot.

When newly input object information is matched with pre-stored object information, the pre-stored object information may be proposed to a user, and thus, a user may check whether the newly input object information is already pre-stored.

When newly input object information is matched with pre-stored object information, selection of any one of the newly input object information and the pre-stored object information may be proposed, and thus, a user may conveniently input object information using the pre-stored object information, and when the user intends to newly input other similar object information, an error of misrecognizing the new object information as the pre-stored object information by a controller may be prevented.

In addition, discovery time information may be output, and thus, a user may recognize a time point when information on a discovered object is generated, thereby more conveniently using output information.

An object may be detected using an image acquired in the travel operation, and information except for an image of a discovered object may be output in the output operation, and thus, the accuracy of detection through image acquisition may be enhanced while privacy of the user is protected.

### BRIEF DESCRIPTION OF THE DRAWINGS

FIG. 1 is a perspective view of a mobile robot 100 and a charging stand 200 for charging the mobile robot 100 according to an embodiment of the present disclosure.
FIG. 2 is a diagram of the mobile robot 100 of FIG. 1 viewed from the above.
FIG. 3 is a diagram of the mobile robot 100 of FIG. 1 viewed from the front.
FIG. 4 is a diagram of the mobile robot 100 of FIG. 1 viewed from the below.
FIG. 5 is a block diagram showing a control relationship of main components of the mobile robot 100 of FIG. 1.
FIG. 6 is a flowchart showing a control method of a mobile robot according to an embodiment of the present disclosure.
FIG. 7A is a flowchart showing a control method of a mobile robot according to a first embodiment of the present disclosure, FIG. 7B is a flowchart showing a control method of a mobile robot according to a second embodiment of the present disclosure, and FIG. 7C is a flowchart showing a control method of a mobile robot according to a third embodiment of the present disclosure.
FIG. 8 is a flowchart showing a control method of a mobile robot according to another embodiment of the present disclosure.
FIG. 9 is a flowchart showing an input operation S 100 according to another embodiment of the present disclosure.
FIGs. 10 to 16 are diagrams showing a user environment of a control method according to an embodiment of the present disclosure. FIGs. 10 to 14 show a user environment for user input in the input operation S 100, and FIGs. 15 and 16 show a user environment for output to a user in an output operation S300.

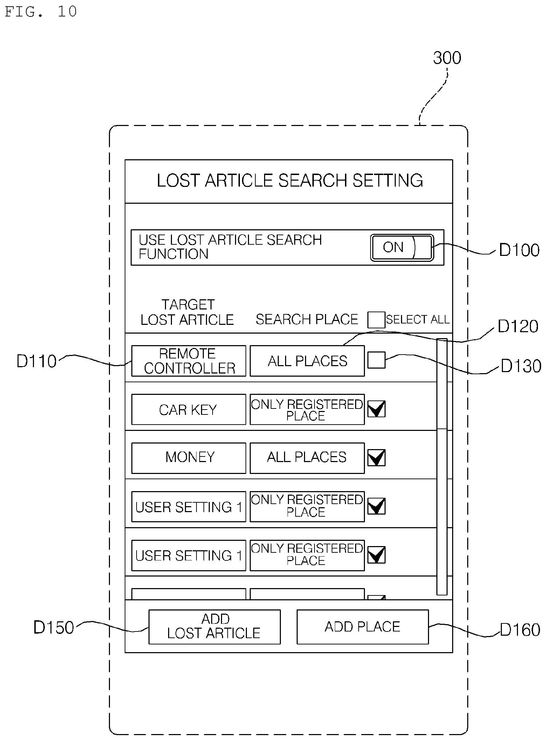

FIG. 10 is a diagram showing a main image for inputting object information and area information.

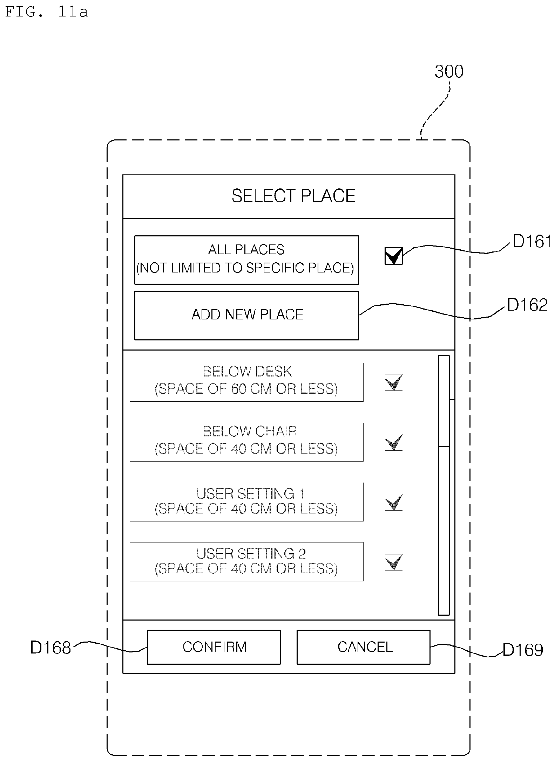

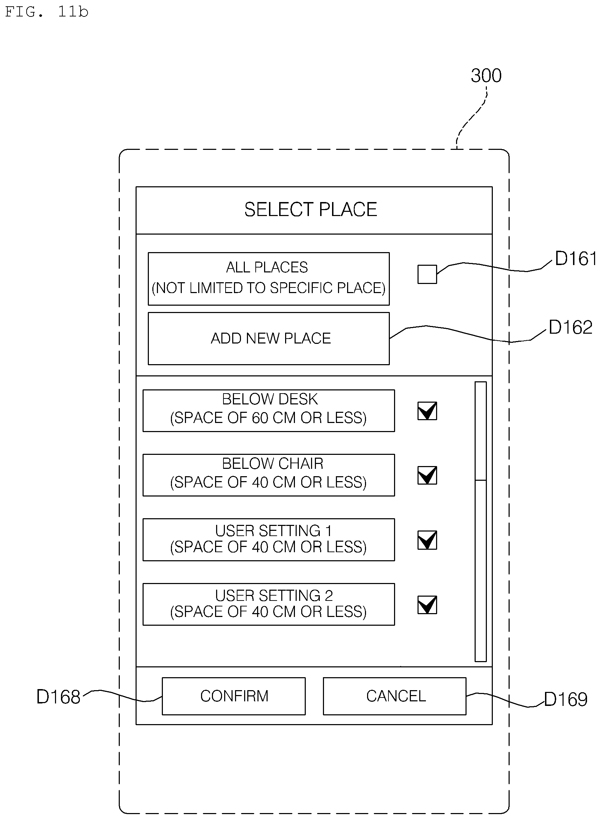

FIGs. 11A and 11B are diagrams showing an image for inputting detailed area information, FIG. 11A shows an image of a state in which an entire traveling area is selected, and FIG. 11B shows an image of a state in which a partial area of a traveling area is selected.

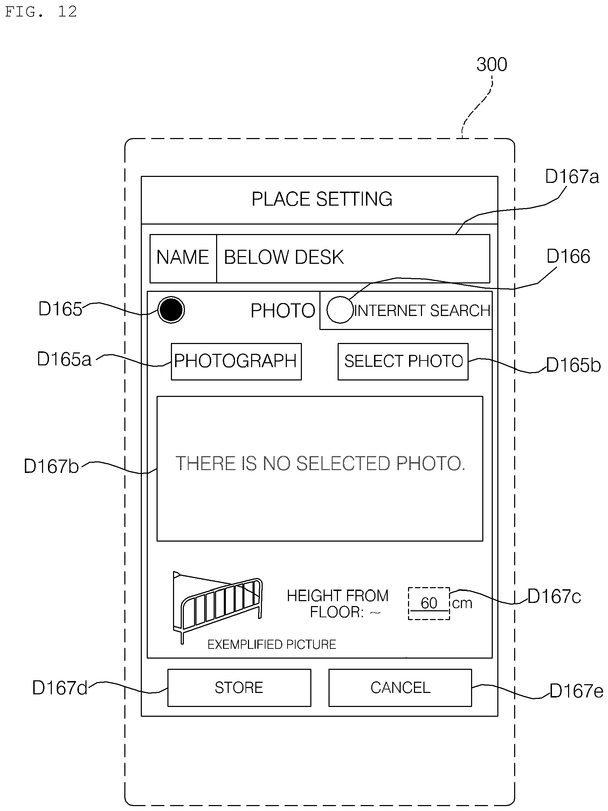

FIG. 12 is a diagram showing an image that receives detailed information of a partial area.

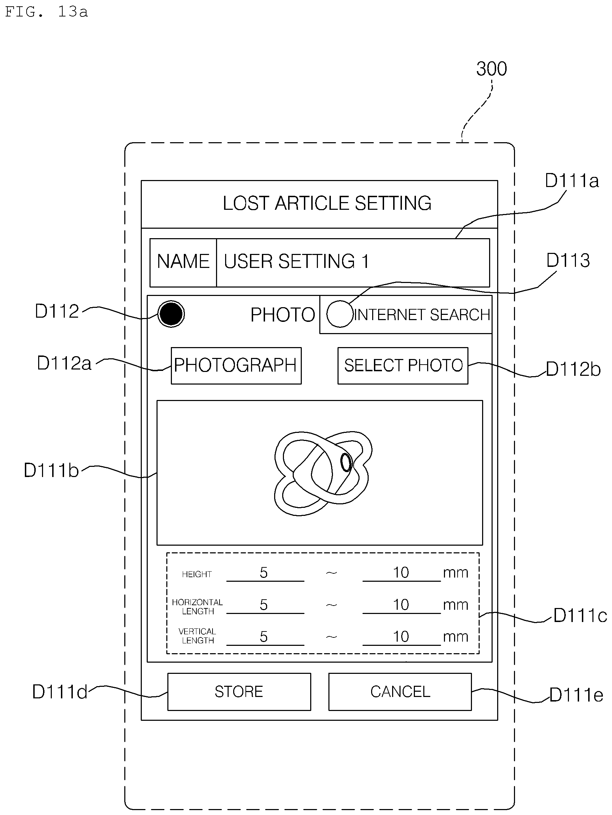

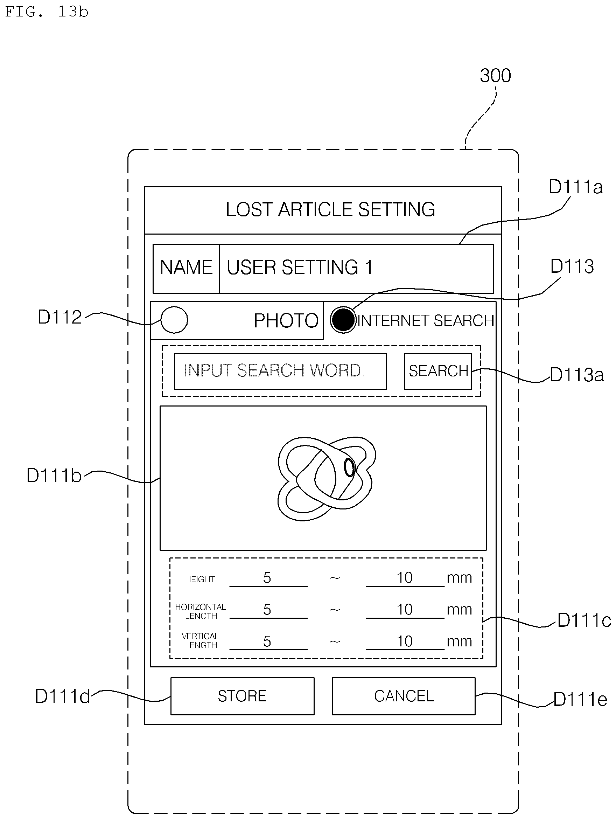

FIGs. 13A and 13B are diagrams showing an image for inputting detailed object information, FIG. 13A shows an image for capturing a photo (image) or selecting a photo, and FIG. 13B shows an image for Internet search.

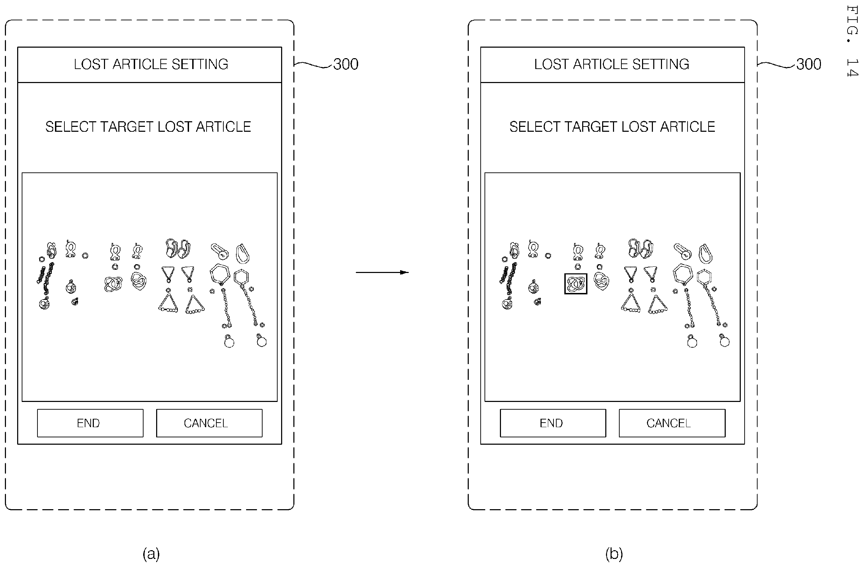

FIG. 14 is a diagram of an image showing a procedure in which some of a plurality of objects is selected in an input image.

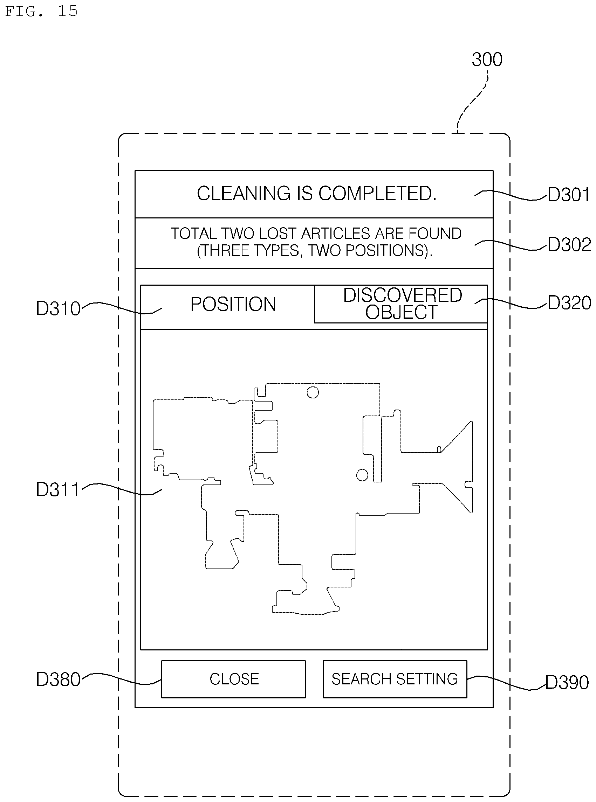

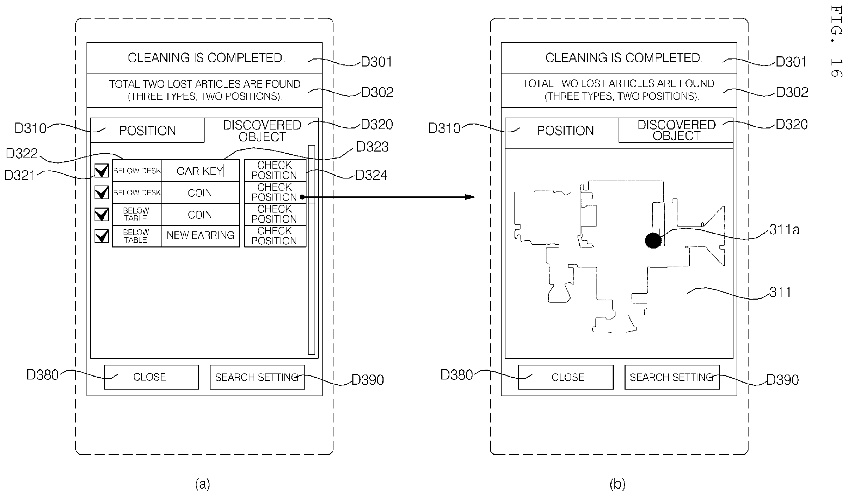

FIGs. 15 and 16 are diagrams showing an image for outputting identification information and position information of a discovered object.

### DETAILED DESCRIPTION OF THE PREFERRED EMBODIMENTS

A mobile robot 100 according to the present disclosure may be a robot that autonomously moves using a wheel or the like and may be a domestic helper robot, a robot cleaner, and the like.

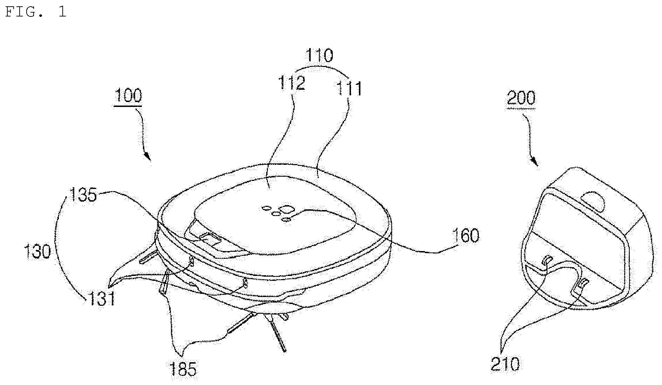

Hereinafter, with reference to FIGs. 1 to 5, a robot cleaner 100 of the mobile robot will be exemplified, but the present disclosure is not limited thereto.

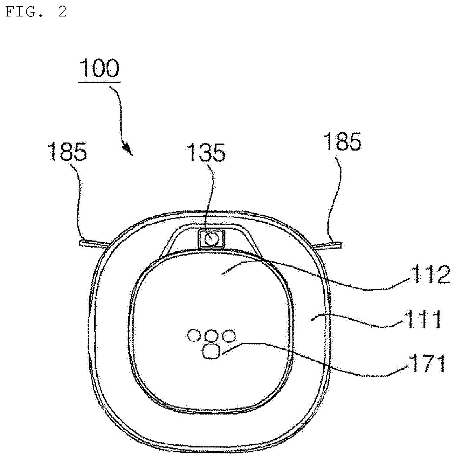

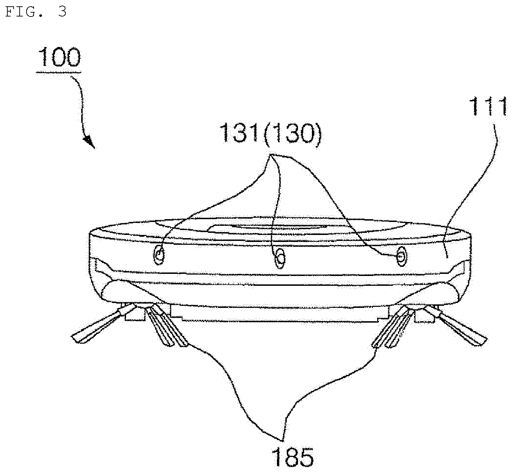

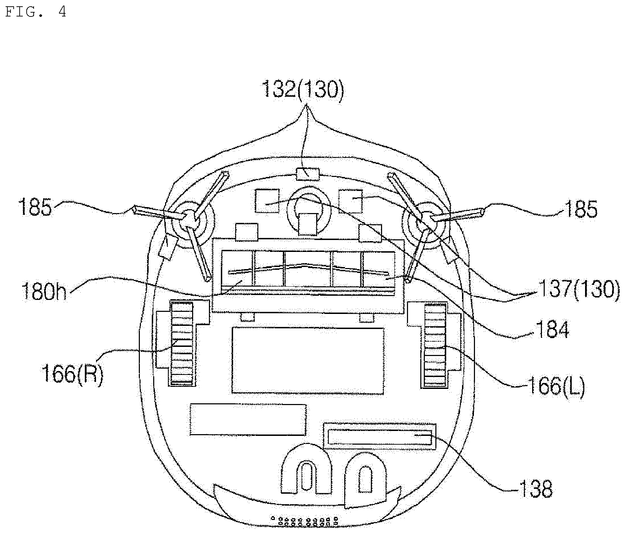

The mobile robot 100 may include a main body 110. Hereinafter, when portions of the main body 110 are defined, a portion directed toward a ceiling in a traveling area may be defined as an upper surface portion (refer to FIG. 2), a portion direction toward a bottom in the traveling area may be defined as a bottom surface portion (refer to FIG. 4), and a portion of a circumference of the main body 110 between the upper surface portion and the bottom surface portion, which is directed in a traveling direction, may be defined as a front surface portion (refer to FIG. 3). A portion directed in an opposite direction to the front surface portion of the main body 110 may be defined as a rear surface portion. The main body 110 may include a case 111 that forms a space for accommodating various components included in the mobile robot 100.

The mobile robot 100 may include a sensing unit 130 for detecting a surrounding object. The sensing unit 130 may detect information on the surrounding object while the mobile robot 100 travels. The sensing unit 130 may detect surrounding environment information of the mobile robot 100. The sensing unit 130 may detect information on a surrounding environment such as a cliff or an obstacle. The mobile robot 100 may search for an object through a surrounding object detection function of the sensing unit 130.

The surrounding objet may refer to furniture or a lost article which is positioned on a traveling surface, an external upper object, and the like. The external upper object may be a ceiling positioned in an upward direction of the mobile robot 100, a bottom surface of furniture, or the like.

The information on the surrounding object may include information on an image captured by the mobile robot 100. The information on the surrounding object may include information on a distance to the surrounding object from the mobile robot 100.

The sensing unit 130 may be installed at an upper surface portion and/or front portion of the main body 110. A detection direction of the sensing unit 130 may be an upward direction, a forward and backward direction, and/or a lateral direction.

The sensing unit 130 may detect an image of a surrounding object or may detect a distance to the surrounding object. The sensing unit 130 may detect the information on the surrounding object at each position over time during movement.

The sensing unit 130 may include an image detector 135 for detecting an image of a surrounding object. The image detector 135 may include a digital camera for photographing a traveling area. The digital camera may include an image sensor (e.g., a CMOS image sensor) including at least one optical lens, and a plurality of photodiodes (e.g., pixels) on which an image is formed by light passing through the optical lens, and a digital signal processor (DSP) for configuring an image based on a signal output from the photodiodes. The DSP may generate a video image including frames including still images as well as a still image.

The sensing unit 130 may include a distance detector 131 for detecting a distance to a surrounding object. The distance detector 131 may be disposed at the front surface portion of the main body 110. The distance detector 131 may detect a front obstacle. The sensing unit 130 may include the plurality of distance detectors 131. The distance detector 131 may be embodied using ultrasonic waves or infrared rays. The distance detector 131 may be embodied using a camera.

The sensing unit 130 may include a cliff detector 132 for detecting whether a cliff is present on a bottom in the traveling area. The sensing unit 130 may include the plurality of cliff detectors 132.

The sensing unit 130 may further include a lower image sensor 137 for acquiring an image of the floor.

The mobile robot 100 may include a traveling unit 160 for moving the main body 110. The traveling unit 160 may move the main body 110 along the floor. The traveling unit 160 may include at least one driving wheel 166 for moving the main body 110. The traveling unit 160 may include a driving motor. The driving wheel 166 may be installed on the left and right of the main body 110 and, hereinafter, will be referred to as a left wheel 166(L) and a right wheel 166(R).

The left wheel 166(L) and the right wheel 166(R) may be driven by one driving motor but, as necessary, may include a left wheel driving motor for driving the left wheel 166(L) and a right wheel driving motor for driving the right wheel 166(R). A driving direction of the main body 110 may be changed to the left or to the right by forming a difference of rotation speed between the left wheel 166(L) and the right wheel 166(R).

The mobile robot 100 may include a cleaner 180 for cleaning the floor. The mobile robot 100 may perform a clean while moving in the traveling area. The cleaner 180 may include a suction device for sucking foreign substances, brushes 184 and 185 for sweeping with a broom, a dust canister (not shown) for storing foreign substances collected by the suction device or the brushes, and/or a mopping unit (not shown) for mopping.

A suction inlet 180h for sucking air may be formed in the bottom surface portion of the main body 110. The main body 110 may include a suction device (not shown) that provides suction force to suck air through the suction inlet 180h, and a dust canister (not shown) that collects sucked dust along with air through the suction inlet 180h.

An opening for inserting and removing the dust canister may be formed in the case 111, and a dust canister cover 112 for opening and closing the opening may be rotatably installed on the case 111.

The main body 110 may include a main brush 184 with a roll type, which has brushes exposed through the suction inlet 180h, and an auxiliary brush 185 135 that is positioned at a front side of the bottom surface portion of the main body 110 and has brushes including a plurality of wings that radially extends. Dusts may be removed from the floor in a traveling area via rotation of the brushes 184 and 185, and dusts separated from the floor may be sucked through the suction inlet 180h and may be collected in the dust canister.

A battery 138 may supply power required for an overall operation of the mobile robot 100 as well as the driving motor. When the battery 138 is discharged, the mobile robot 100 may drive to return to a charging stand 200 for charging, and during driving to return, the mobile robot 100 may autonomously detect a position of the charging stand 200.

The charging stand 200 may include a signal transmitter (not shown) for transmitting a predetermined return signal. The return signal may be an ultrasonic signal or an infrared (IR) signal, but is not limited thereto.

The mobile robot 100 may include a communication module 170 for getting input or receiving information and outputting or transmitting information. The communication module 170 may include a communication unit 175 for transmitting and receiving information to and from other external devices. The communication module 170 may include an input unit 171 for inputting information. The communication module 170 may include an output unit 173 for outputting information.

For example, the mobile robot 100 may directly receive information from the input unit 171. In another example, the mobile robot 100 may receive information input to a separate terminal 300 through the communication unit 175.

For example, the mobile robot 100 may directly output information to the output unit 173. In another example, the mobile robot 100 may transmit information to the separate terminal 300 through the communication unit 175, and the terminal 300 may output information.

The communication unit 175 may be configured to communicate with an external server, the terminal 300, and/or the charging stand 200. The communication unit 175 may include a signal detector for receiving the return signal. The charging stand 200 may transmit an infrared (IR) signal through the signal transmitter, and the signal detector may include an infrared sensor for detecting the IR signal. The mobile robot 100 may be moved to a position of the charging stand 200 and may be docked on the charging stand 200 according to the IR signal transmitted from the charging stand 200. Through such docking, charging may be performed between a charging terminal 133 of the mobile robot 100 and a charging terminal 210 of the charging stand 200.

The communication unit 175 may receive information input from the terminal 300 such as a smartphone or a computer. The communication unit 175 may transmit information to be output to the terminal 300. The terminal 300 may output information received from the communication unit 175.

The communication unit 175 may receive various pieces of command signals from the terminal 300. The communication unit 175 may receive area information for traveling from the terminal 300. The communication unit 175 may receive information on a target object from the terminal 300. The communication unit 175 may transmit information on a discovered object that is detected during traveling to the terminal 300. The communication unit 175 may transmit identification information of the discovered object to the terminal 300. The communication unit 175 may transmit information on a position of the discovered object to the terminal 300.

The input unit 171 may receive On/Off or various commands. The input unit 171 may receive the area information. The input unit 171 may receive the object information. The input unit 171 may include various buttons or touch pads, a microphone, or the like.

The output unit 173 may notify a user about various pieces of information. The output unit 173 may include a speaker and/or a display. The output unit 173 may output information on a discovered object that is detected during traveling. The output unit 173 may output identification information of the discovered object. The output unit 173 may output information on a position of the discovered object.

The mobile robot 100 may include a controller 140 for processing and determining various pieces of information, e.g., mapping and/or localization of a current position. The controller 140 may control an overall operation of the mobile robot 100 through control of various components included in the mobile robot 100. The controller 140 may map a traveling area and may localize a current position on a map through the image. That is, the controller 140 may perform a simultaneous localization and mapping (SLAM) function.

The controller 140 may receive information from the communication module 170 and may process the information. The controller 140 may receive information from the input unit 171 and may process the information. The controller 140 may receive information from the communication unit 175 and may process the information. The controller 140 may receive detection information from the sensing unit 130 and may process the detection information. The detection information may refer to information on the surrounding obj ect.

The controller 140 may transmit information to the communication module 170 for output. The controller 140 may transmit information to the communication unit 175. The controller 140 may control output of the output unit 173. The controller 140 may control driving of the traveling unit 160. The controller 140 may control an operation of the cleaner 180.

The mobile robot 100 may include a storage unit 150 for storing various data. The storage unit 150 may record various pieces of information required to control the mobile robot 100 and may include a volatile or non-volatile recording medium.

The storage unit 150 may store a map of a traveling area. The map may be input by an external terminal that exchanges information with the mobile robot 100 through the communication unit 175 and may be generated via autonomous learning of the mobile robot 100. In the former case, the external terminal 300 may be, for example, a remote controller, a PDA, a laptop, a smart phone, or a tablet PC, in which an application for map setting is installed.

An actual traveling area may correspond to a traveling area on a map. The traveling area may be defined as the range obtained by summing an entire planar area on which the mobile robot 100 has traveled and an entire planar area on which the mobile robot 100 currently travels.

The controller 140 may also recognize a moving path of the mobile robot 100 based on an operation of the traveling unit 160. For example, the controller 140 may recognize the current or past moving speed or a traveling distance of the mobile robot 100 based on a rotation speed of the driving wheel 166 and may also recognize a current or past procedure of changing a direction depending on a rotation direction of each of the driving wheels 166(L) and 166(R). A position of the mobile robot 100 on a map may be updated based on recognized traveling information of the mobile robot 100. The position of the mobile robot 100 on the map may also be updated using the image information.

The controller 140 may control the mobile robot 100 to travel in an area specified by the area information input or received from the communication module 170. The controller 140 may control the mobile robot 100 to travel and search for an object in the specified area. The controller 140 may control the mobile robot 100 to search for an object based on object information input or received from the communication module 170. The controller 140 may control the communication module 170 to output identification information and position information of the detected discovered object and to transmit the identification information and the position information to the terminal 300.

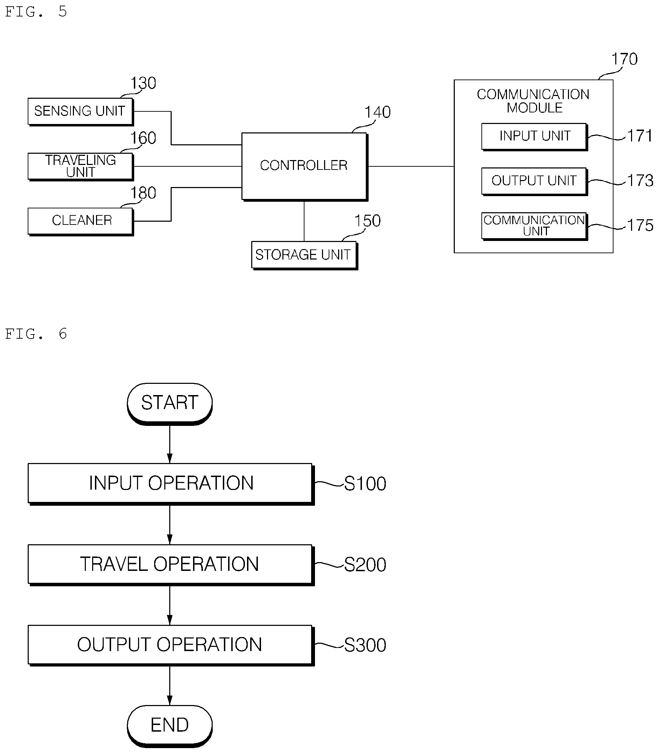

Hereinafter, a method of controlling the mobile robot 100 according to embodiments of the present disclosure will be described with reference to FIGs. 6 to 9. Repeated descriptions in flowcharts are denoted by the same reference numerals and, thus, a repeated description will be omitted.

The control method may be performed by the controller 140. The present disclosure may be related to the control method of the mobile robot 100 or the mobile robot 100 including the controller 140 for performing the control method. The present disclosure may be related to a computer program including each operation of the control method and may be related to a recording medium with a program recorded thereon for executing the control method by a computer. The `recording medium' refers to a computer readable recording medium. The present disclosure relates to a mobile robot control system including both hardware and software.

Operations of flowcharts of the control method and combinations of the flowcharts may be performed according to computer program instructions. The instructions may be installed in a general-purpose computer, a special-purpose computer, or the like and may generate elements for performing functions described in operations of the flowcharts.

In some embodiments, the functions described in the operations may be generated irrespective of their order. For example, two operations that are continually illustrated may be substantially simultaneously performed or the operations may be frequently performed in reverse order depending on corresponding functions.

Referring to FIG. 6, the control method may include an input operation S100 of inputting information to the mobile robot 100 by a user. The control method may include a travel operation S200 for traveling based on information received in the input operation S100. The control method may include an output operation S300 of outputting the information acquired in the travel operation S200. The input operation S100, the travel operation S200, and the output operation S300 may be sequentially performed.

The controller 140 may receive object information. The controller 140 may receive area information. The controller 140 may control traveling of the mobile robot 100 based on the object information and the area information. The controller 140 may perform control to output identification information of a discovered object. The controller 140 may perform control to output information on a position of the discovered object.

In the input operation S100, the object information may be received. In the input operation S100, the object information may be received in order to specify a target object.

For example, the object information may be selected in a database (DB) for storing information. The DB for storing information may be updated. The DB may be updated using information that is received or input through the communication unit 175 or the input unit 171. In another example, the object information may also be selected from the DB that is provided through a wired and wireless network. In another example, the object information may also be directly input by the user.

The object information may include a name of a type of an object. For example, the name of the type of the object may include a key, a key including a key ring, a car key, a remote controller, a car remote controller, a lock, a cellular phone, a wireless telephone, a tablet PC, paper money (Korean currency or foreign currency), a coin (Korean currency or foreign currency), a book (a notebook, a diary, or a delivery food menu), or the like.

The name of the type of the object may be directly input by a user. The name of the type of the object may be selected from the stored DB. The name of the type of the object may be selected on the Internet.

The name of the type of the object may be selectively input among a general name and a detailed name. The name of the type of the object may be input as a high-ranking concept or may also be input as a low-ranking concept. For example, the name of the type of the object may be input as `paper money' or `dollar paper money' or `US paper money'.

The name of the type of the object may be selectively input among a name without a condition and a name with a condition. For example, the name of the type of the object may be input as a 'key' without a condition or may be input as a `key including a key ring' with a condition.

The object information may include an image of an object. The image of the object may be a photo or a picture.

The image may be a photo that is directly captured by a user. The image may be selected from the stored DB. The image may be selected on the Internet.

In the input operation S100, all of a plurality of object images on the selected or captured image may be input. In the input operation S 100, any one of the plurality of object images on the selected or captured image may be selected and input (refer to FIG. 14).

The object information may include information on the volume of an object. The volume information may include information on an occupied area. The volume information may include height information. The volume information may include a horizontal length, a vertical length, and a height.

In the input operation S 100, the area information may be received. In the input operation S 100, area information for traveling may be received.

For example, the area information may be selected from the stored DB. Any one of a plurality of areas in the DB may be selected and area information may be received. The DB of the plurality of areas may be updated. When a map is updated using information acquired while the mobile robot 100 travels, the DB of the plurality of areas may also be updated. The area information may also be selected as a predetermined area by a user on a map of the stored traveling area.

In another example, the area information may be information on the characteristics of a specific area that is directly input by a user.

A partial area of the traveling area may be divided. The traveling area on a map may be divided into a plurality of partial areas, and a partial area of the traveling area on the map may be separately specified and may be divided into partial areas.

A partial area of the traveling area may be divided using information that is detected while the mobile robot 100 travels. For example, a partial area of the traveling area may be divided using an image detected by the mobile robot 100, distance information, or the like.

A partial area of the traveling area may be divided according to a predetermined division reference. In the input operation S 100, the partial area may be specified based on the area information.

For example, the predetermined division reference may be configured to divide each room of the traveling area into partial areas. In another example, the predetermined division reference may be configured to divide an area having a height to an outer upper limit surface of the traveling area, which is equal to or less than a predetermined value.

According to the area information in the input operation S 100, an area below furniture (a desk, a table, a chair, or a bed) having a low height to the outer upper limit surface may be selected. The area below furniture may be configured to be specified according to the input of the area information in the input operation.

The area information may include information on the height to the outer upper limit surface. The outer upper limit surface may be an outer surface that the mobile robot 100 is directed upward and may be a ceiling surface of an indoor area, a bottom surface of furniture, or the like. The height to the outer upper limit surface may be a height to the outer upper limit surface from the floor of the traveling area or may be a height to the outer upper limit surface from the mobile robot 100. For example, when a user inputs a specific value as the height information of the outer upper limit surface, a partial area having a height to the outer upper limit surface of the traveling area, which is equal to or less than a predetermined value, may be specified.

The area information may include information on an area below specific furniture. For example, a user may select an area below specific furniture to specify a partial area.

The area information may include an image of a partial area. A partial area corresponding to the image of the partial area may be specified using the input image of the partial area. For example, the user may input an image of an area below a bed to specify the area below the below as a partial area.

In the travel operation S200, the mobile robot 100 may travel in the traveling area. In the travel operation S200, the mobile robot 100 may travel an area specified according to the area information. In the travel operation S200, the mobile robot 100 may travel in the partial area specified according to the area information.

In the travel operation S200, the mobile robot 100 may search for an object. That is, in the travel operation S200, the mobile robot 100 may search for (detect) the object. In the travel operation S200, the mobile robot 100 may search for an object specified according to the object information. In the travel operation S200, the mobile robot 100 may search for an object while traveling in the partial area specified according to the area information.

The mobile robot 100 may be moved in the specified partial area on in a stored map and may search for an object while traveling in the specified partial area. The controller 140 may compare the detected object with the object specified according to the object information and may determine similarity therebetween. When determining that the detected object corresponds to the specified object, the controller 140 may consider the detected object as a discovered object. In the travel operation S200, the mobile robot 100 may store information on the discovered object. When a plurality of discovered objects is detected in the travel operation S200, information on a discovered object, corresponding to each discovered object, may be stored.

In the travel operation S200, when an object specified according to the object information is discovered, even if the mobile robot 100 does not travel in an entire specified area, the mobile robot 100 may be configured to return to a charging stand.

In the output operation S300, information on the stored discovered object may be output. When a plurality of discovered objects is detected, information on a discovered object, corresponding to each discovered object, may be output in the output operation S300. As such, the user may verify a discovered object that is found by the mobile robot 100 through the travel operation S200.

Information on the discovered object may include identification on the discovered object. The identification information of the discovered object may include a name indicating a type of the discovered object.

In the output operation S300, the identification information of the discovered object may be output to be matched with the input name of the type of the object. For example, the identification information may be output to indicate the discovered object matched with the input object information.

For example, the identification information of the discovered object may include an image of the discovered object. In another example, the identification information of the discovered object may include only other information except for the image of the discovered object.

An object may be searched for using the image acquired in the travel operation S200, and in this case, information except for the image of the discovered object may be output in the output operation S300. As such, the accuracy of detection through image acquisition may be enhanced while privacy of the user is protected.

The identification information of the discovered object may include the volume of the discovered object. For example, the volume information of the discovered object may include a horizontal length, a vertical length, and a height.

Information on the discovered object may include information on a position of the discovered object. The position information may be output as a position on a map (refer to FIGs. 15 and 16). For example, a map of the traveling area and the position of the discovered object on the map may be displayed and output.

The information on the discovered object may include discovery time information. The discovery time information may include a discovery date and/or time of a corresponding discovered object.

In the output operation S300, identification information of the discovered object may be output. In the output operation S300, position information of the discovered object may be output. In the output operation S300, the discovery time information of the discovered object may be output.

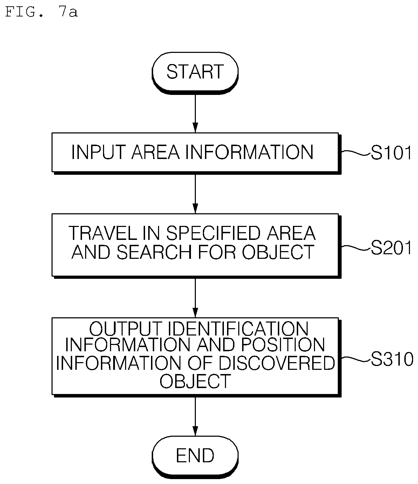

Hereinafter, a control method according to first to fourth embodiments will be described with reference to FIGs. 7A to 8. FIGs. 7A to 8 sequentially show input operations S101, S102, and S110), travel operations S201, S202, S203, S211, and S212, and an output operation S310.

Referring to FIG. 7A, the control method according to the first embodiment may include operation S101 of receiving the area information. After operation S101, the mobile robot 100 may travel in an area specified according to the area information and may perform operation S201 of searching for an object. Information on a discovered object through the operation S201 may be stored in the storage unit 150. After operation S201, operation S310 of outputting the identification information and the position information of the discovered object may be performed. According to the first embodiment, object information may not be input in the input operation S101, and all objects detected in the travel operation S201 may be determined as a discovered object.

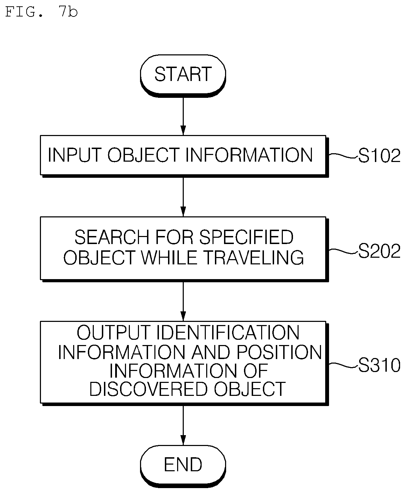

Referring to FIG. 7B, the control method according to the second embodiment may include operation S102 of receiving the object information. After operation S102, the mobile robot 100 may travel and may perform operation S202 of searching for an object specified according to the object information. In operation S202, the mobile robot 100 may travel in the entire traveling area. Alternatively, in operation S202, the mobile robot 100 may also travel in the entire traveling area until the mobile robot 100 discovers the specific object. After operation S202, operation S310 of outputting the identification information and the position information of the discovered object may be performed. According to a second embodiment, in the input operation S102, area information may not be input, and in the travel operation S202, the mobile robot 100 may travel in the entire traveling area and may determine only a specific object as a discovered object.

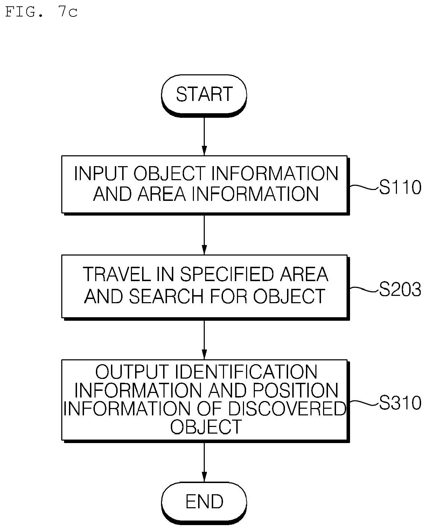

Referring to FIG. 7C, the control method according to the third embodiment may include operation S 110 of receiving the object information and the area information. After operation S110, the mobile robot 100 may travel in an area specified according to the area information and may perform operation S203 of searching for an object specified according to the object information. In operation S203, the mobile robot 100 may travel in the specified partial area. Alternatively, in operation S203, the mobile robot 100 may also travel in the entire traveling area until the mobile robot 100 discovers the specific object. After operation S203, operation S310 of outputting the identification information and the position information of the discovered object may be performed. According to a third embodiment, in the input operation S110, both the area information and the object information may be input, and in the travel operation S203, the mobile robot 100 may travel in the specified area and may determine only the specific object as the discovered object.

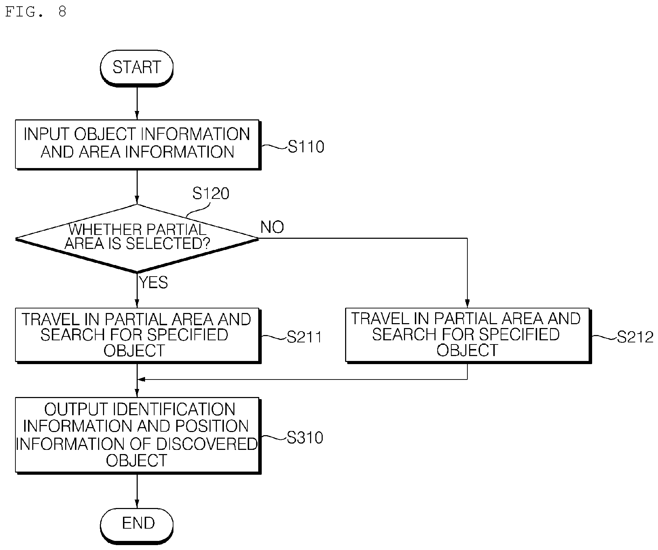

Referring to FIG. 8, the control method according to another embodiment may include operation S110 of receiving information. Based on the received area information, operation S120 of determining whether a partial area of the traveling area is selected may be performed. In operation S120, when it is determined that the partial area is selected, operation S211 in which the mobile robot 100 travels in the selected partial area may be performed. In operation S120, when it is determined that the partial area is not selected, operation S212 in which the mobile robot 100 travels in the entire traveling area may be performed. In operations S211 and S212, a specified object may be searched based on the received object information. After operations S211 and S212, operation S310 of outputting the identification information and the position information of the discovered object may be performed.

Operation S211 may be set to enable a function of searching for an object only in a specified partial area. When an object positioned on the floor in the specified partial area is detected, the detected object may be set to be stored as information on the discovered object. When the mobile robot 100 detects the object positioned on the floor in the specified partial area, an output signal may be transmitted to the user. When the mobile robot 100 detects the object positioned on the floor in an area that is not the specified partial area, the detected object may not be stored as the information on the discovered object. When the mobile robot 100 detects the object positioned on the floor in an area that is not the specified partial area, an output signal may not be transmitted to the user.

In the input operation S100, object information may be input using a method of selecting one of stored object information. In the input operation S100, information on a new object to be selectable by the user may be stored. The newly stored object information may be stored as one of various pieces of object information, and then, information may be selected in the input operation S100. For example, the user may newly store object information of a key owned by the user, and may then input object information using a method of selecting object information of a key, which is pre-stored when the key is lost.

In the input operation S100, the expression 'object information is received' may generally mean that i) object information is selected in a DB, and ii) information on a new object that is not present in the DB is received. In the input operation S100, object information may be newly received by directly capturing/uploading a photo or typing a name of a type of an object by a user.

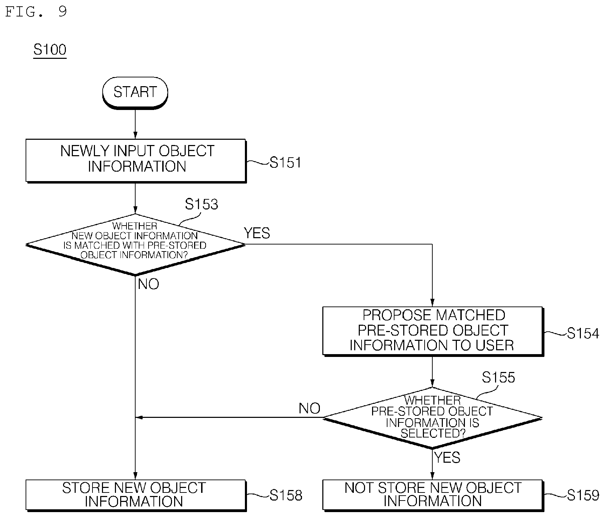

With reference to FIG. 9, the input operation S100 according to another embodiment will be described. In the input operation S100, operation S151 of newly receiving the object information may be performed.

Operation S153 of determining whether the information on the new object input in operation S151 is matched with pre-stored object information may be performed. In operation S153, the newly input object information and the pre-stored object information may be compared with each other. In operation S153, the new object information may be compared with each of a plurality of pieces of pre-stored object information. In operation S153, similarity between the new object information and any one of the pre-stored object information is equal to or greater than predetermined similarity, it may be determined that the new object information is matched with the pre-stored object information.

When the newly input object information is matched with the pre-stored object information in operation S153, operation S154 of proposing the pre-stored object information to a user may be performed. The pre-stored object information matched in operation S154 may be output to the user through a display or the like. As such, the user may check whether the newly input object information is already pre-stored.

When the newly input object information is matched with the pre-stored object information in operation S153, operation S155 of proposing selection of any one of the newly input object information and the pre-stored object information may be performed. In operation S155, any one of the newly input object information and the pre-stored object information may be selected according to user intention. Operation S155 may be an operation of determining whether the pre-stored object information is selected. As such, convenience may be provided to allow the user to input object information using pre-stored object information, and when the user intends to newly input information on another similar object, an error of misrecognizing the new object information as the pre-stored object information by a controller may be prevented.

According to the present embodiment, operation S155 may be performed after operation S154. In detail, when the new object information is matched with the pre-stored object information in operation S153, operation S155 of proposing the pre-stored object information to the user and selecting any one of the newly input object information and the pre-stored object information may be performed.

In operation S153, when it is determined that the newly input object information and the pre-stored object information are not matched with each other, operation S158 of storing the newly input object information may be performed. The newly input object information may be stored in the storage unit 150 and may then be compared with newly input another object information. In this case, in the travel operation S200, an object specified according to the newly input object information may be searched for.

In operation S155, when the pre-stored object information is not selected, operation S158 of storing the newly input object information may be performed. In operation S155, when the newly input object information is selected, operation S158 of storing the newly input object information may be performed. A description of operation S158 is the same as the above description.

In operation S155, when the newly input object information is not selected, the newly input object information may not be stored (S159). In operation S155, when the pre-stored object information is selected, the newly input object information may not be stored (S159). In this case, a next operation may be performed without storing the newly input object information. In this case, in the travel operation S200, an object specified according to the selected pre-stored object information may be searched for.

Area information may also be input using a method of dividing a plurality of preset areas on a map and selecting any one of the plurality of areas in the input operation S100. In addition, the plurality of areas may be differently divided according to user setting.

Hereinafter, with reference to FIGs. 10 to 16, an example of a user environment (interface) for embodying the control method will be described. FIGs. 10 to 16 are diagrams showing an example of a display image, and the terminal 300 is exemplified as a display but the present disclosure is not limited thereto. In order to select a display part and an input part on the image of FIGs. 10 to 16, a method of touching a screen is exemplified, but the present disclosure is not limited thereto.

According to the present embodiment, information input to the separate terminal 300 may be received through the communication unit 175, and the image of FIGs. 10 to 14 is an image of a touchscreen of the terminal 300. However, in another example, information may be received from the input unit 171 such as a touchscreen or other buttons on the main body 110 of the mobile robot 100, and the image of FIGs. 10 to 14 may also be embodied on the touchscreen on the main body 110.

According to the present embodiment, information may be transmitted to the separate terminal 300 through the communication unit 175, and the image of FIGs. 15 and 16 may be an output image of the terminal 300. However, in another example, the mobile robot 100 may directly output information to the output unit 173 such as a display, and the image of FIGs. 15 and 16 may also be embodied on a screen on the main body 100.

Referring to FIG. 10, in the input operation S100, a main image for inputting object information and area information may be output. An input unit D100 for inputting whether the object search function is enabled may be configured. A user may select the input unit D100 for inputting whether the object search function is enabled using a method of touch and may turn on/off the object search function (lost article search function). FIG. 10 shows a state in which the object search function is turned on.

Referring to FIG. 10, in the input operation S100, an object indicator DII0 that indicates a target object and an area indicator D120 that indicates a travelling area may be matched with each other and may be output. An object indicated on the object indicator D100 may be a lost article to be found. An area indicated on the area indicator D120 may refer to a place in which a corresponding object is searched for.

Referring to FIG. 10, the object indicator D110 and the area indicator D120 may be matched with each other and may be displayed as one set. The plurality of sets may be configured. The plurality of sets may differ. A set selector D130 may be configured to allow a user to select only a set for enabling the object search function among the plurality of sets. The set selector D130 may be touched to enable or disable traveling based on the corresponding set. When traveling based on any one specific set is enabled by the set selector D130, the mobile robot 100 may travel in an area based on area information of the specific set and may search for an object according to object information of the specific set. FIG. 10 shows the case in which a function of searching for a car key only in a registered place (partial area) and a function of searching for money in all places (entire traveling area) are enabled and shows the case in which a function of searching for a remote controller is disabled.

In the input operation S100, a plurality of pieces of object information may be received. Referring to FIG. 10, object information of a plurality of objects (car key and money) may be input by the object indicator D I 10 and the set selector D130.

When a plurality of pieces of object information is received, area information matched with each of pieces of object information may be received in the input operation S100. Referring to FIG. 10, area information (only a registered place or all places) matched with a plurality of objects (car key and money) may be input by the area indicator D120 and the set selector D130.

In the input operation S100, when the plurality of pieces of object information and area information matched with each of the pieces of object information are received, a target object may differ for each area to which a current position belongs in the travel operation S200. For example, in the travel operation S200 after the input operation S100 of FIG. 10, a car key and money may be searched for while the mobile robot 100 travels in a specified partial area (registered place), and only money may be searched for while the mobile robot 100 travels in an area that is not a specified partial area.

Referring to FIG. 10, the object indicator D110 for each set may be selected through a touch and object information may be changed. In addition, the area indicator D120 for each set may be selected through a touch and area information may be changed.

Referring to FIG. 10, an object adder D150 may be selected through a touch and selectable object information may be additionally generated. The object adder D150 may be selected to generate a new set. In addition, an area adder D160 may be selected through a touch and selectable area information may be additionally generated.

FIGs. 11A and 11B are diagrams showing an image for inputting detailed area information. FIG. 11A shows an image in the case in which an entire traveling area is selected, and FIG. 11B shows an image in the case in which a partial area of a traveling area is selected. FIGs. 11A and 11B are diagrams showing an image when the area indicator D120 is selected in the image of FIG. 10.

Referring to FIG. 11A, when an entire area enabling unit D161 is selected and enabled through a touch, an object of a corresponding set may be searched for from the entire traveling area.

Referring to FIG. 11B, when the entire area enabling unit D161 is selected and disabled through a touch, an object of a corresponding set may be searched for from the partial area. A name, a feature, or the like indicating a corresponding area may be indicated on an area information identification unit D163. The plurality of area information identification units D163 may be configured, and an area information enabling unit D164 corresponding to each of the area information identification units D163 may be configured. Through the area information enabling unit D164, a range of the enabled area may be changed. Only area information corresponding to the area information identification unit D163 selected by the area information enabling unit D164 may be received, and an object of a corresponding set may be searched for only in a partial area specified according to the input area information. In addition, an area adder D162 may be selected through a touch, and the selectable area information identification unit D163 may be additionally generated.

Referring to FIGs. 11A and 11B, a current state of a corresponding set may be lastly set through selection of confirmation D168. Through selection of cancelation D168, setting change in the image of FIGs. 11A and 11B may be cancelled.

FIG. 12 is a diagram showing an image that receives detailed information of a partial area. In the image of FIG. 11B, when the area adder D162 or the area information identification unit D163 is selected, the image of FIG. 12 may be configured to be output. The image of FIG. 12 may include a part D167a on which a name of an area is indicated. When an area image input unit D165 for inputting area information as an image (photo) is selected, an input unit D165a for directly capturing a photo and an input unit D165b for selecting any one of pre-stored photos may be configured. It may be possible to select a search input unit D166 for searching for area information from information on the Internet. The image of FIG. 12 may include a part D167b that indicates an input photo. The image of FIG. 12 may include a height input unit D167c for inputting information on a height to the outer upper limit surface. Through confirmation D167d, changed area information may be lastly set. Through selection of cancelation D167e, setting change may be cancelled in the image of FIG. 12.

FIGs. 13A and 13B are diagrams showing an image for inputting detailed object information, FIG. 13A shows an image for capturing a photo (image) or selecting a photo, and FIG. 13B shows an image for Internet search.

When the object indicator D110 is selected in the image of FIG. 10, an image of FIG. 13A or 13B may be configured to be output. The image of FIGs. 13A and 13B may include a part D111a that indicates a name of an object. When an object image input unit D112 for inputting object information as an image (photo) is selected, an input unit D112a for directly capturing a photo and an input unit D112b for selecting any one of pre-stored photos may be configured. It may be possible to select a search input unit D 113 for searching for area information from information on the Internet. When the search input unit D113 is selected through a touch, the image of FIG. 13B may be output. Object information may be searched for on the Internet through a search unit D 113a on the image of FIG. 13B. The image of FIGs. 13A and 13B may include a part D111b that indicates an input photo. The image of FIGs. 13A and 13B may include a volume input unit D111c for inputting volume information of an object. Through selection of confirmation D111d, changed object information may be lastly set. Through selection of cancellation D111e, setting change on the image of FIGs. 13A and 13B may be cancelled.

FIG. 14 is a diagram of an image showing a procedure in which some of a plurality of objects is selected in an input image. When the input unit D112a or the input unit D112b is selected in the image of FIG. 13A to directly capture a photo or select a photo, a corresponding photo (image) may be configured in the image of FIG. 14. When the search unit D113a is selected in the image of FIG. 13B and a photo is searched for, the corresponding photo (image) may be configured on the image of FIG. 14. When there is a plurality of objects in the photo indicated on the image of FIG. 14, some of a plurality of objects may be configured to be selected. Referring to FIG. 14, a partial image may be divided to select any one of a plurality of objects.

FIG. 15 is a diagram showing a main image for outputting identification information and position information of a discovered object. When the travel operation S200 is terminated in a state in which the object search function is enabled, the image of FIG. 15 or 16 may be output according to the output operation S300.

The image of FIGs. 15 and 16 may include a traveling end notification unit D301 that indicates that the travel operation S200 is terminated. The traveling end notification unit D301 may be indicated in the form of a message. The image of FIGs. 15 and 16 may include a summary information indicator D302 indicating summarized information of a discovered object. For example, the number of discovered objects and/or the number of positions of the discovered objects may be indicated on the summary information indicator D302.

Close D380 may be selected to terminate output of the image of FIGs. 15 and 16. A setting unit D390 may be selected to output the image of FIG. 10 while terminating output of the image of FIGs. 15 and 16.

Referring to FIG. 15, a position information selector D310 may be selected, and a map and a discovered object position indicated on the map may be output. When the position information selector D310 is selected, a position indication window D311 indicating a map and position indication on the map may be output.

Referring to FIG. 16, an identification information selector D320 may be selected to output identification information of a discovered object. When the identification information selector D320 is selected, an identification information indicator D323 may be output. A name of a type of a discovered object may be displayed on the identification information indicator D323. The identification information indicator D323 may indicate a name of a type corresponding to the discovered object among names of types of objects input in the input operation S100. In addition, a position information indicator D322 that indicates position information of a discovered object corresponding to the identification information indicator D323 may be output. The identification information indicator D323 and the position information indicator D322 may be output as a pair. A position indication enabling unit D321 corresponding to the identification information indicator D323 may be configured. Among a plurality of discovered object lists, a position may be indicated on a map with respect to only the discovered object enabled through the position indication enabling unit D321. In addition, the identification information indicator D323 and a corresponding position confirmation D324 may be configured. When a plurality of discovered objects is detected, if the position confirmation D324 corresponding to a specific discovered object among a plurality of discovered objects is selected, a position of the specific discovered object may be emphasized and indicated on the map. For example, when the corresponding position confirmation D324 is touched to check a position of a coin that is a discovered object, a map and a coin position D311a may be indicated on the position indication window D311.

### [Description of reference numerals]

| | | | |
|---|---|---|---|
| 100: | mobile robot | 120: | sensing unit |
| 140: | controller | 160: | traveling unit |
| 180: | cleaner | 200: | charging stand |
| 300: | terminal | S100: | input operation |
| S200: | travel operation | S300: | output operation |

## Claims

1. A mobile robot (100) comprising:
a traveling unit (160) configured to move a main body (110);
a sensing unit (120) configured to detect a surrounding object while the mobile robot (100) travels;
a communication module (170) configured to get input or receive information and to output or transmit information; and
a controller (140) configured to perform control to search for an object while the mobile robot (100) travels in an area specified according to area information input or received from the communication module (170), and to perform control to output or transmit identification information and position information of a detected discovered object through the communication module (170);
wherein the controller (140) performs control to search for an object specified according to the object information that is input or received from the communication module (170);
**characterized in that**:
the controller (140) is configured to perform control to compare object information that is newly input or received from the communication module (170) with pre-stored object information and to propose the pre-stored object information through the communication module (170) when the newly input object information is matched with the pre-stored object information.

2. The mobile robot (100) of claim 1, wherein a partial area is divided from a traveling area; and
wherein:the controller (140) performs control to search for an object while the mobile robot. (100) travels in the partial area specified according to the area information.

3. The mobile robot (100) of claim 1, wherein the communication module (170) gets input or receives a plurality of pieces of object information and gets input or receives area information matched with each of the pieces of object information; and
wherein the controller (140) performs control to change an object that is searched for depending on an area to which a current position belongs.

4. The mobile robot (100) of claim 1, wherein the controller (140) performs control to search for an object using an image acquired from the sensing unit (120) and performs control to output or transmit information except for an image of the discovered object through the communication module (170).

5. A method of controlling a mobile robot (100), the method comprising:
an input operation (S100) of receiving information for traveling;
a travel operation (S200) of searching for an object while the mobile robot (100) travels in an area specified according to the area information; and
an output operation (S300) of outputting identification information and position information of a discovered object, detected in the travel operation;
wherein the input operation includes receiving object information,
wherein the travel operation includes searching for an object specified according to the object information,
**characterized in that**:
the method includes comparing object information that is newly input or received with pre-stored object information and proposing the pre-stored object information when the newly input object information is matched with the pre-stored object information.

6. The method of claim 5, wherein a partial area is divided from a traveling area; and
wherein the input operation includes specifying the partial area according to the area information.

7. The method of claim 5, wherein the input operation includes specifying an area below furniture according to input of the area information.

8. The method of claim 5, wherein the area information includes information on a height to an outer upper limit surface.

9. The method of claim 5, wherein the area information includes an image of a partial area.

10. The method of claim 5, wherein the input operation includes receiving a plurality of pieces of object information and receiving area information matched with each of the pieces of object information; and
wherein the travel operation includes changing an object that is searched for depending on an area to which a current position belongs.

11. The method of claim 5, wherein the output operation includes outputting discovery time information of a discovered object.

12. The method of claim 5, further comprising searching for an object using an image acquired in the travel operation,
wherein the output operation includes outputting information except for an image of a discovered object.

## Patentansprüche

1. Beweglicher Roboter (100), der Folgendes umfasst:
eine Bewegungseinheit (160), die konfiguriert ist, einen Hauptkörper (110) zu bewegen;
eine Erfassungseinheit (120), die konfiguriert ist, ein Objekt in der Umgebung zu detektieren, während sich der bewegliche Roboter (100) bewegt;
ein Kommunikationsmodul (170), das konfiguriert ist, eine Eingabe zu erhalten oder Informationen zu empfangen und Informationen auszugeben oder zu übertragen; und
eine Steuereinheit (140), die konfiguriert ist, eine Steuerung auszuführen, um nach einem Objekt zu suchen, während sich der bewegliche Roboter (100) in einem Bereich bewegt, der entsprechend den Bereichsinformationen, die eingegeben oder vom Kommunikationsmodul (170) empfangen wurden, festgelegt ist, und eine Steuerung auszuführen, um Identifikationsinformationen und Positionsinformationen eines detektierten entdeckten Objekts durch das Kommunikationsmodul (170) auszugeben oder zu übertragen;
wobei die Steuereinheit (140) eine Steuerung ausführt, um nach einem Objekt zu suchen, das entsprechend den Objektinformationen festgelegt ist, die eingegeben oder vom Kommunikationsmodul (170) empfangen wurden;
**dadurch gekennzeichnet, dass**:
die Steuereinheit (140) konfiguriert ist, eine Steuerung auszuführen, um Objektinformationen, die neu eingegeben oder vom Kommunikationsmodul (170) empfangen wurden, mit zuvor gespeicherten Obj ektinformationen zu vergleichen und die zuvor gespeicherten Objektinformationen durch das Kommunikationsmodul (170) vorzuschlagen, wenn die neu eingegebenen Objektinformationen mit den zuvor gespeicherten Objektinformationen übereinstimmen.

2. Beweglicher Roboter (100) nach Anspruch 1, wobei ein Teilbereich von einem Bewegungsbereich abgeteilt ist; und
wobei die Steuereinheit (140) eine Steuerung ausführt, um nach einem Objekt zu suchen, während sich der bewegliche Roboter (100) in dem Teilbereich bewegt, der entsprechend den Bereichsinformationen festgelegt wurde.

3. Beweglicher Roboter (100) nach Anspruch 1, wobei das Kommunikationsmodul (170) eine Eingabe erhält oder mehrere Teile von Objektinformationen empfängt und eine Eingabe erhält oder Bereichsinformationen empfängt, die mit jedem der Teile der Objektinformationen übereinstimmen; und
wobei die Steuereinheit (140) eine Steuerung ausführt, um abhängig von einem Bereich, zu dem eine aktuelle Position gehört, ein Objekt zu ändern, nach dem gesucht wird.

4. Beweglicher Roboter (100) nach Anspruch 1, wobei die Steuereinheit (140) eine Steuerung ausführt, um unter Verwendung eines Bildes, das von der Erfassungseinheit (120) aufgenommen wurde, nach einem Objekt zu suchen, und eine Steuerung ausführt, um durch das Kommunikationsmodul (170) Informationen mit Ausnahme eines Bildes des entdeckten Objekts auszugeben oder zu übertragen.

5. Verfahren zum Steuern eines beweglichen Roboters (100), wobei das Verfahren die folgenden Schritte umfasst:
einen Eingabevorgang (S100) zum Empfangen von Informationen zur Bewegung;
einen Bewegungsvorgang (S200) zum Suchen nach einem Objekt, während sich der bewegliche Roboter (100) in einem Bereich bewegt, der entsprechend den Bereichsinformationen festgelegt wurde; und
einen Ausgabevorgang (S300) zum Ausgeben von Identifikationsinformationen und Positionsinformationen eines entdeckten Objekts, das im Bewegungsvorgang detektiert wurde;
wobei der Eingabevorgang das Empfangen von Objektinformationen umfasst,
wobei der Bewegungsvorgang das Suchen nach einem Objekt umfasst, das entsprechend den Objektinformationen festgelegt wurde,
**dadurch gekennzeichnet, dass**:
das Verfahren das Vergleichen von Objektinformationen, die neu eingegeben oder empfangen wurden, mit zuvor gespeicherten Objektinformationen und das Vorschlagen der zuvor gespeicherten Objektinformationen, wenn die neu eingegebenen Objektinformationen mit den zuvor gespeicherten Objektinformationen übereinstimmen, umfasst.

6. Verfahren nach Anspruch 5, wobei ein Teilbereich von einem Bewegungsbereich abgeteilt wird; und
wobei der Eingabevorgang das Festlegen des Teilbereichs entsprechend den Bereichsinformationen umfasst.

7. Verfahren nach Anspruch 5, wobei der Eingabevorgang das Festlegen eines Bereichs unter Möbeln entsprechend einer Eingabe der Bereichsinformationen umfasst.

8. Verfahren nach Anspruch 5, wobei die Bereichsinformationen Informationen bezüglich einer Höhe zu einer äußeren oberen Grenzfläche umfassen.

9. Verfahren nach Anspruch 5, wobei die Bereichsinformationen ein Bild eines Teilbereichs umfassen.

10. Verfahren nach Anspruch 5, wobei der Eingabevorgang das Empfangen von mehreren Teilen von Objektinformationen und das Empfangen von Bereichsinformationen, die mit jedem der Teile von Obj ektinformationen übereinstimmen, umfasst; und
wobei der Bewegungsvorgang in Abhängigkeit von einem Bereich, zu dem eine aktuelle Position gehört, das Ändern eines Objekts, nach dem gesucht wird, umfasst.

11. Verfahren nach Anspruch 5, wobei der Ausgabevorgang das Ausgeben von Entdeckungszeitinformationen eines entdeckten Objekts umfassen.

12. Verfahren nach Anspruch 5, das ferner das Suchen nach einem Objekt unter Verwendung eines Bildes, das im Bewegungsvorgang aufgenommen wurde, umfasst,
wobei der Ausgabevorgang das Ausgeben von Informationen mit Ausnahme eines Bildes eines entdeckten Objekts umfasst.

## Revendications

1. Robot mobile (100) comportant
une unité de déplacement (160), configurée pour déplacer un corps principal (110) ;
une unité de détection (120) configurée pour détecter un objet environnant pendant que le robot mobile (100) se déplace ;
un module de communication (170) configuré pour obtenir une entrée ou recevoir des informations et délivrer en sortie ou transmettre des informations ; et
une commande (140) configurée pour exécuter une commande pour rechercher un objet pendant que le robot mobile (100) se déplace dans une zone spécifiée en fonction d'informations de zone entrées ou reçues du module de communication (170), et pour exécuter une commande pour délivrer en sortie ou transmettre des informations d'identification et des informations de position d'un objet découvert détecté via le module de communication (170) ;
dans lequel la commande (140) exécute une commande pour rechercher un objet spécifié en fonction des informations d'objet qui sont entrées ou reçues du module de communication (170) ;
**caractérisé en ce que** :
la commande (140) est configurée pour exécuter une commande pour comparer des informations d'objet qui ont été récemment entrées ou reçues du module de communication (170) avec des informations d'objet pré-stockées et pour proposer les informations d'objet pré-stockées via le module de communication (170) lorsque les informations d'objet récemment entrées correspondent aux informations d'objet pré-stockées.

2. Robot mobile (100) selon la revendication 1, dans lequel une zone partielle est divisée à partir d'une zone de déplacement ; et
dans lequel la commande (140) exécute une commande pour rechercher un objet pendant le robot mobile (100) se déplace dans la zone partielle spécifiée en fonction des informations de zone.

3. Robot mobile (100) selon la revendication 1, dans lequel le module de communication (170) obtient une entrée ou reçoit une pluralité d'éléments d'information d'objet et obtient une entrée ou reçoit des informations de zone correspondant à chacun des éléments d'information d'objet ; et
dans lequel la commande (140) exécute une commande pour changer un objet qui est recherché en fonction d'une zone à laquelle une position actuelle appartient.

4. Robot mobile (100) selon la revendication 1, dans lequel la commande (140) exécute une commande pour rechercher un objet en utilisant une image acquise à partir de l'unité de détection (120) et exécute une commande pour délivrer en sortie ou transmettre des informations sauf pour une image de l'objet découvert via le module de communication (170).

5. Procédé de commande d'un robot mobile (100), le procédé comportant :
une opération d'entrée (S100) consistant à recevoir des informations en vue d'un déplacement ;
une opération de déplacement (S200) consistant à rechercher un objet pendant le robot mobile (100) se déplace dans une zone spécifiée en fonction des informations de zone ; et
une opération de sortie (S300) consistant à délivrer en sortie des informations d'identification et des informations de position d'un objet découvert, détecté pendant l'opération de déplacement ;
dans lequel l'opération d'entrée inclut la réception d'informations d'objet,
dans lequel l'opération de déplacement inclut la recherche d'un objet spécifié en fonction des informations d'objet,
**caractérisé en ce que** :
le procédé inclut de comparer des informations d'objet qui sont récemment entrés ou reçues avec des informations d'objet pré-stockées et de proposer les informations d'objet pré-stockées lorsque les informations d'objet récemment entrées correspondent aux informations d'objet pré-stockées.

6. Procédé selon la revendication 5, dans lequel une zone partielle est divisée à partir d'une zone de déplacement ; et
dans lequel l'opération d'entrée inclut de spécifier la zone partielle en fonction des informations de zone.

7. Procédé selon la revendication 5, dans lequel l'opération d'entrée inclut de spécifier une zone sous un meuble en fonction d'une entrée des informations de zone.

8. Procédé selon la revendication 5, dans lequel les informations de zone incluent des informations concernant une hauteur par rapport à une surface de limite supérieure extérieure.

9. Procédé selon la revendication 5, dans lequel les informations de zone incluent une image d'une zone partielle.

10. Procédé selon la revendication 5, dans lequel l'opération d'entrée inclut de recevoir une pluralité d'éléments d'information d'objet et de recevoir des informations de zone correspondant à chacun des éléments d'information d'objet ; et
dans lequel l'opération de déplacement inclut de changer un objet qui est recherché en fonction d'une zone à laquelle une position actuelle appartient.

11. Procédé selon la revendication 5, dans lequel l'opération de sortie inclut de délivrer en sortie des informations d'heure de découverte d'un objet découvert.

12. Procédé selon la revendication 5, comportant en outre de rechercher un objet en utilisant une image acquise pendant l'opération de déplacement,
dans lequel l'opération de sortie inclut de délivrer en sortie des informations sauf pour une image d'un objet découvert.
